**Europäisches Patentamt**

**European Patent Office**

**Office européen des brevets**

(19)

(11) Veröffentlichungsnummer: **0 182 739**
**B1**

(12) **EUROPÄISCHE PATENTSCHRIFT**

(45) Veröffentlichungstag der Patentschrift:
10.08.88

(51) Int. Cl.⁴: **F 16 B 5/06,** A 01 G 9/14

(21) Anmeldenummer: **85810477.1**

(22) Anmeldetag: **18.10.85**

(54) Vorrichtung zum Festhalten einer biegsamen Materialbahn, insbesondere einer Kunststoffolie.

(30) Priorität: **26.10.84 CH 5143/84**

(43) Veröffentlichungstag der Anmeldung:
**28.05.86 Patentblatt 86/22**

(45) Bekanntmachung des Hinweises auf die Patenterteilung:
**10.08.88 Patentblatt 88/32**

(84) Benannte Vertragsstaaten:
**AT BE DE FR GB IT LU NL SE**

(56) Entgegenhaltungen:
**DE-A-2 208 822**
**FR-A-2 141 257**

(73) Patentinhaber: **Dübi & Co., Industriezone Hofmatt,
CH- 3360 Herzogenbuchsee (CH)**

(72) Erfinder: **Steineberg, Kurt, Marktgasse 35, CH- 4900
Langethal (CH)**

(74) Vertreter: **Tschudi, Lorenz, Bovard AG
Patentanwälte VSP Optingenstrasse 16, CH- 3000
Bern 25 (CH)**

**Beschreibung**

Die Erfindung geht aus von einer Vorrichtung zum Festhalten einer biegsamen Materialbahn, insbesondere einer über eine Leichtmetallkonstruktion eines Gewächshauses gelegten lichtdurchlässigen Kunststoffolie, mit einer an einer Unterlage befestigbaren im Querschnitt trapezförmigen Profilschiene und einer dem Querschnitt der Schiene entsprechend geformten, in die Schiene einführbaren, elastisch nachgiebigen Einlage, welche Materialbahn dazu bestimmt ist, zwischen der in die Schiene eingeführten Einlage und der Schiene eingeklemmt zu werden

Bei einer solchen bekannten Vorrichtung besteht die im Querschnitt trapezförmige Profilschiene aus galvanisiertem Blech und die dem Querschnitt der Schiene entsprechend geformte Einlage aus PVC-Material. In die im Querschnitt U-formige Einlage wird ein Kunststoff Spanndraht eingesetzt, um die zwischen der in die Schiene eingeführte Einlage und der Schiene verlegte Materialbahn (Kunststoffolie) festzuklemmen.

Da aber die Einlage wie auch die Profilschiene nur in gewissen Toleranzen (Einlage +0,15/-0,10 mm und die Profilschiene +/- 0,2 mm) hergestellt werden können, müssen in der Werkstatt diese Teile gemessen und angeschrieben werden oder bei größeren Toleranzen eine dickere Kunststoffart (Durchmesser 3 - 4 mm) in die im Querschnitt U-förmige Einlage eingebracht werden.

In solchen Vorrichtungen werden insbesondere über eine Leichtmetallkonstruktion eines Gewächshauses gelegten lichtdurchlässigen Kunststoffolien festgehalten. In den gradlinig verlaufenden Vorrichtungen dieser Art werden die Ränder der Kunststoffolien eingeklemmt. Damit aber die Garantie besteht, daß die Kunststoffolie auf dem Gewächshaus bei großen Sturmböen nicht aus der Profilschiene herausspringt und beim Einführen die Kunststoffolie nicht verschnitten wird, muß der Kunststoffdraht aus der Einlage entfernt, die Einlage mit der Kunststoffolie in die Profilschiene eingeklopft und anschließend der Draht mit einem speziellen Einrollwerkzeug wieder in die Einlage eingedrückt werden.

Auch beim fachgemäßen und sorgfältigen Arbeiten entstehen oft Löcher und Risse in der auf diese Weise einzuklemmenden Folie. Insbesondere besteht eine Abrutschgefahr des Einrollwerkzeuges beim Einbringen des Kunststoffdrahtes, was unweigerlich zur Folienbeschädigung führt.

Der Erfindung lag die Aufgabe zugrunde, eine Vorrichtung der eingangs erwähnten Art zu schaffen, mit welcher die Montagearbeiten auf ein Minimum reduziert werden und die Beschädigung der Materialbahn während der Montage praktisch ausgeschlossen wird. Des weiteren sollten die Herstellungskosten einer solchen Vorrichtung nicht diejenige der bekannten Vorrichtung übersteigen.

Diese Aufgabe wird erfindungsgemäß bei der Vorrichtung nach dem Oberbegriff des Patentanspruches 1 auf solche Weise gelöst, daß die Einlage aus einer Trägerplatte mit Längsschlitzen und zwei mit der Trägerplatte einstückigen Schenkeln besteht, welche Schenkel zum Einführen in die Profilschiene bestimmt sind, und daß Schrauben mit flachen Schäften vorgesehen sind, welche Schäfte sich zu ihren freien Enden hin konisch erweitern und zum Durchführen durch die Längsschlitze der Trägerplatte in den Raum zwischen den Schenkeln bestimmt sind, um durch Drehen der Schrauben mit den Schäften um 90° die beiden Schenkel, deren Abstand voneinander kleiner ist als die Breite des Schaftes jeder Schraube, voneindander zu spreizen.

Mit Vorteil können die freien Enden der beiden Schenkel der Einlage nach innen abgebogen sein und der Kopfschlitz jeder Schraube kann koaxial mit dem flachen Schaft verlaufen.

Der Erfindungsgegenstand wird nachstehend anhand der Zeichnung beispielsweise näher erläutert. Es zeigen:

Fig. 1 einen Querschnitt einer erfindungsgemäen Vorrichtung im zusammengesetzten Zustand,

Fig. 2 eine perspektivische zersprengte Ansicht der Einlage und einer Schraube der Vorrichtung nach der Fig. 1. und

Fig. 3 eine perspektivische Ansicht eines Gewächshauses mit der angebrachten Vorrichtung nach der Fig. 1.

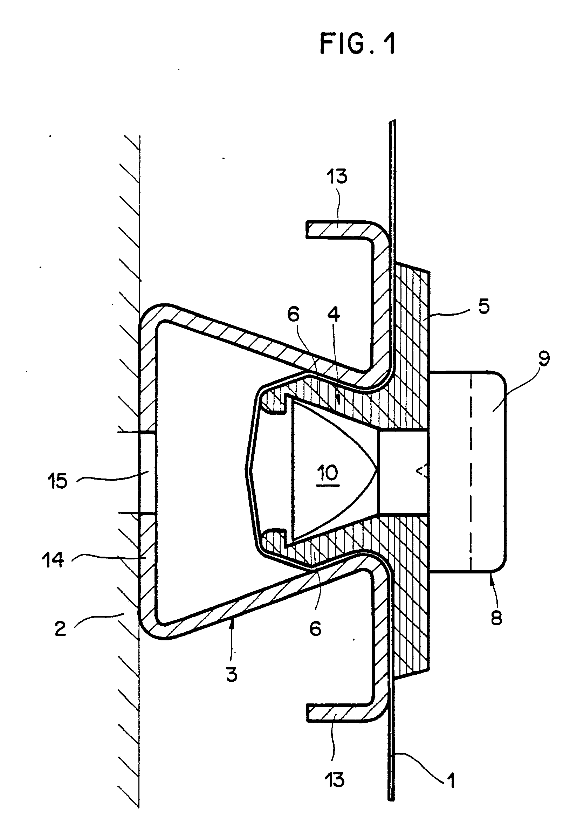

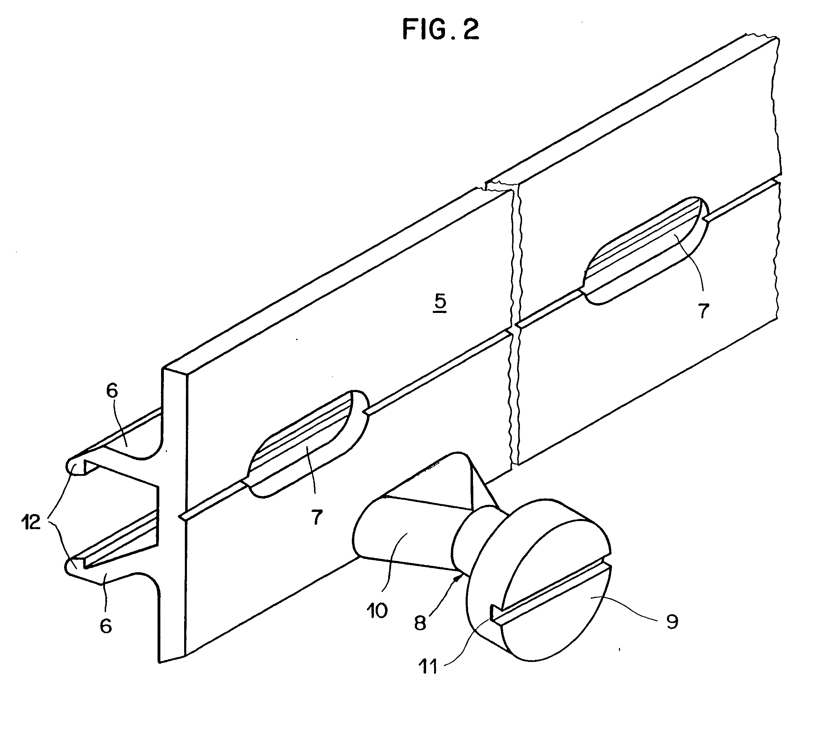

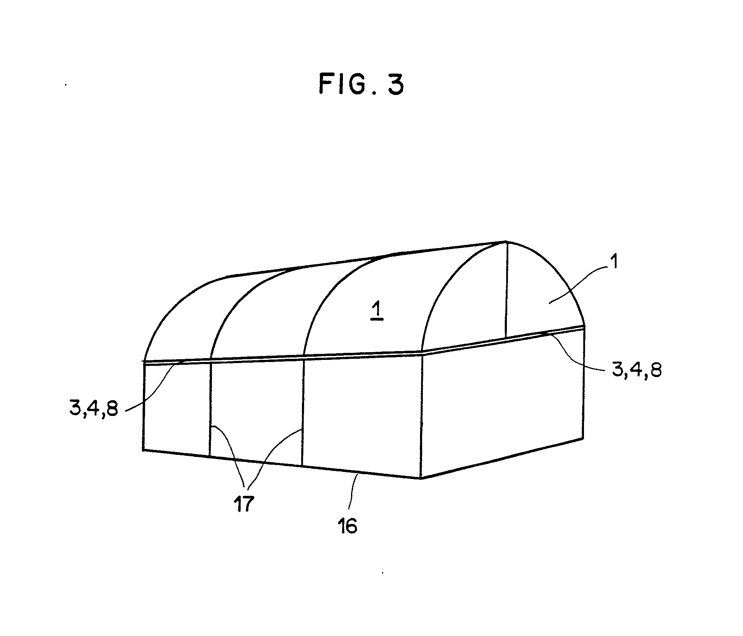

In den Figuren 1 und 3 ist die mit 1 bezeichnete biegsame Materialbahn eine lichtdurchlässige Kunststoffolie, die über eine Leichtmetallkonstruktion 17 eines Gewächshauses 16 gespannt gelegt ist. Die in den Figuren 1 und 2 dargestellte Vorrichtung zum Festhalten dieser Kunststoffolie umfasst eine im Querschnitt trapezförmige Profilschiene 3, die aus galvanisiertem oder verzinktem Blech besteht. Die Profilschiene 3 ist in ihrem Steg 14 mit mehreren Gewindelöchern 15 versehen, durch welche nicht dargestellte Schrauben durchgeführt werden, um die Profilschiene 3 an einer Unterlage 2 anzuschrauben. Die Endteile 13 der Schiene 3 sind abgekröpft, wodurch die Beschädigung der Folie 1 vermieden wird.

Wie aus der Figur 2 am besten ersichtlich ist, besteht die aus PVC-Material bestehende Einlage 4 aus einer Trägerplatte 5 mit Längsschlitzen 7 und zwei mit der Trägerplatte einstückigen zur Trägerplatte senkrecht verlaufenden Schenkeln 6. Die Schenkel 6 sind elastisch nachgiebig und im Abstand voneinander über die gesamte Länge der Trägerplatte 5 angeordnet.

Wie aus der Figur 1 ersichtlich ist, ist zwischen der in die Schiene 3 eingeführten Einlage 4 und der Schiene 3 die Kunststoffolie 1 deren Dicke 0,1 bis 1 mm betragen kann, eingeklemmt. Die PVC-Einlage 4 mit der Kunststoffolie 1 wird in die Profilschiene eingeklopft.

Die Sicherung der Einlage 4 mit der Kunststofffolie 1 in der Profilschiene 3 wird mittels spezieller Schrauben 8 bewerkstelligt. Jede Schraube 8, wie aus der Figur 2 zu entnehmen ist, besteht aus einem Kopf 9 und einem flachen Schaft 10. Der flache Schaft 10 erweitert sich konisch zu seinem freien Ende hin. Die Schäfte 10 der Schrauben 8 sind dazu bestimmt, durch die Längsschlitze 7 in der Trägerplatte 5 in den Raum zwischen den Schenkeln 6 durchgeführt zu werden. Durch das Drehen der Schrauben 8 mit den Schäften 10 um 90° werden die beiden Schenkel 6 voneinandergespreizt, weil der Abstand der Schenkel 6 voneinander kleiner ist als die Breite des Schaftes 10 jeder Schraube 8. Auf diese Weise wird dann die Kunststoffolie 1 zwischen den Aussenflächen der Schenkel 6 und den Innenflächen der Führungsschiene 3 festgeklemmt. Damit gut feststellbar ist, in welcher Position sich der flache Schaft 10 jeder Schraube 8 befindet, verläuft der Kopfschlitz 11 jeder Schraube 8 koaxial mit dem flachen Schaft 10. Die Schraube 8 kann aus Stahl oder Kunststoff bestehen.

Die freien Enden 12 der beiden Schenkel 6 der Einlage 4 sind nach innen abgebogen, sodaß sie Abstützflächen für die in den Raum zwischen den beiden Schenkeln 6 eingeführten Schäfte 10 der Schrauben 8 bilden. Auf diese Weise wird auch eine bessere Auflagefläche für die von außen an den Schenkeln 6 an liegende Kunststoffolie 1 geschaffen.

Die Montagearbeiten sind auf ein Minimum reduziert, da nur noch die Einlage 4 in die Profilschiene 4 eingeklopft und mit den speziellen Schrauben gesichert werden muß. Dank den Schrauben 8 wird eine 100 %-ige Wind- und Sturmsicherung erreicht. Die Montage ist bei dieser Vorrichtung einfacher als vorher, man braucht nur einen Schraubenzieher, wogegen vorher ein spezielles Einrollwerkzeug nötig war, um den Spanndraht in die im Querschnitt U-förmige Einlage einzupressen; dabei bestand aber immer die Gefahr des Abrutschens des Einrollwerkzeuges, was die Beschädigung der Kunststoffolie zur Folge hatte. Die oben beschriebene Vorrichtung ist weniger abhängig von den Toleranzen der Masse sowohl der Profilschiene als auch der Einlage. Die Toleranzen beim Herstellen der Profilschiene und der Einlage der oben beschriebenen Vorrichtung, sind nicht mehr von großer Bedeutung. Dabei übersteigen die Herstellungskosten der neuartigen Vorrichtung keineswegs diejenigen der bekannten Vorrichtung.

## Patentansprüche

1. Vorrichtung zum Festhalten einer biegsamen Materialbahn, insbesondere einer über eine Leichtmetallkonstruktion eines Gewächshauses gelegten lichtdurchlässigen Kunststoffolie, mit einer an einer Unterlage (2) befestigbaren im Querschnitt trapezförmigen Profilschiene (3) und einer dem Querschnitt der Schiene (3) entsprechend geformten, in die Schiene (3) einführbaren, elastisch nachgiebigen Einlage (4), welche Materialbahn (1) dazu bestimmt ist, zwischen der in die Schiene (3) eingeführten Einlage (4) und der Schiene (3) eingeklemmt zu werden, dadurch gekennzeichnet, daß die Einlage (4) aus einer Trägerplatte (5) mit Längsschlitzen (7) und zwei mit der Trägerplatte (5) einstückigen Schenkeln (6) besteht, welche Schenkel (6) zum Einführen in die Profilschiene (3) bestimmt sind, und daß Schrauben (8) mit flachen Schäften (10) vorgesehen sind, welche Schäfte (10) sich zu ihren freien Enden hin konisch erweitern und zum Durchführen durch die Längschlitze (7) der Trägerplatte (5) in den Raum zwischen den Schenkeln (6) bestimmt sind, um durch Drehen der Schrauben (8) mit den Schäften (10) um 90° die beiden Schenkel (6), deren Abstand voneinander kleiner ist als die Breite des Schaftes (10) jeder Schraube (8), voneinander zu spreizen.

2. Vorrichtung nach Patentanspruch 1, dadurch gekennzeichnet, daß die freien Enden (12) der beiden Schenkel (6) der Einlage (4) nach innen abgebogen sind.

3. Vorrichtung nach Patentanspruch 1, dadurch gekennzeichnet, daß der Kopfschlitz (11) jeder Schraube (8) koaxial mit dem flachen Schaft (10) verläuft.

4. Vorrichtung nach Patentanspruch 1, dadurch gekennzeichnet, daß jede Schraube (8) aus Stahl oder Kunststoff besteht.

## Claims

1. Device for holding fast a pliable web of material, especially plastic film placed over a light metal construction of a greenhouse, with a profile rail (3), which is trapezoidal in cross section and which can be secured to a base (2) and an elastically flexible insert (4) shaped according to the cross section of the rail (3) and which is guidable in the rail. The web of material (1) of the device is intended to be squeezed between the insert (4) guided into the rail (3) and the rail (3), characterised in that the insert (4) consists of a support plate (5) with elongated slots (7) and two one-piece shanks (6) with the support plate (5), which shanks (6) are intended for guiding into the profile rails (3), and that screws (8) are provided with flat shafts (10), which shafts (10) are flared to their free ends and which are intended to be placed through the elongated slots (7) of the support plate (5) in the space between the shanks (6), and by turning the screws (8) with the shafts (10) by 90°, the two shanks (6) (the distance between these is less than the breadth of the shaft (10) of each screw (8)) are spread out.

2. Appliance according to claim 1, characterised in that the free ends (12) of the two shanks (6) of the insert (4) are bent inwards.

3. Appliance according to claim 1, characterised in that the head slot (11) of each screw (8) runs coaxially with the flat shafts (10).

4. Appliance according to claim 1, characterised in that each screw (8) is made of steel or plastic.

## Revendications

1. Dispositif pour maintenir une largeur en matière flexible, notamment une feuille en matière plastique transparente disposée sur une construction en métal léger d'une serre, avec un rail en profilé (3) ayant un profil en forme trapézoïdale et pouvant être fixé sur un socle (2), et avec une garniture flexible (4) ayant une forme correspondante au profil du rail (3) et pouvant être glissée dans le rail (3), laquelle largeur en matière flexible (1) est destinée à être serrée entre la garniture (4) glissée dans le rail (3) et le rail (3), caractérisé en ce que la garniture (4) est constituée d'une plaque d'assise (5) avec des ouvertures oblongues (7) et de deux ailes (6) formant une seule pièce avec la plaque d'assise (5), lesquelles sailes (6) sont destinées à être introduites dans le rail en profilé (3), et en ce que les vis (8) comportant des tiges plates (10), lesquelles tiges (10) s'étendent en forme de cône vers leur extrémité libre et sont destinées à être introduites, à travers les ouvertures oblongues (7), dans l'espace entre les ailes (6), afin d'écarter par rotation de 90° des vis (8) avec les tiges (10) les deux ailes (6) l'une de l'autre, dont l'écartement entre elles est plus petit que la largeur de la tige (10) de chaque vis (8).

2. Dispositif selon la revendication 1, caractérisé en ce que les extrémités libres (12) des deux ailes (6) de la garniture (4) sont repliées vers l'intérieur.

3. Dispositif selon la revendication 1, caractérisé en ce que la fente de tête (11) de chaque vis (8) est orientée coaxialement avec la tige plate (10).

4. Dispositif selon la revendication 1, caractérisé en ce que chaque vis (8) est constituée d'acier ou de matière plastique.

# FIG. 1

FIG. 2

# FIG. 3